# EUROPEAN PATENT SPECIFICATION

(11) **EP 2 753 011 B1**
(45) Date of publication and mention of the grant of the patent: **06.03.2019**
(21) Application number: 13305001.3
(22) Date of filing: 02.01.2013
(51) Int. Cl.: H04J 14/02, H04B 10/80

(54) **Device and method for a OADM submarine system**
Vorrichtung und Verfahren für ein OADM-Unterwassersystem
Dispositif et procédé pour un système sous-marin OADM

(43) Date of publication of application: 09.07.2014
(73) Proprietor: Alcatel Lucent, 91620 Nozay (FR)
(72) Inventor: Marcerou, Jean-François, 91620 Nozay (FR); Jaouen, Melanie, 91620 Nozay (FR); Dhalluin, Laurent, 91620 Nozay (FR); Laval, Carine, 91620 Nozay (FR)
(74) Representative: MERH-IP Matias Erny Reichl Hoffmann Patentanwälte PartG mbB

(56) References cited:
- EP-A1- 1 322 046
- EP-A1- 1 598 960
- US-A1- 2002 057 477

## Description

The present document relates to optical transmission systems. In particular, the present document relates to optical submarine transmission systems.

### BACKGROUND

The total capacity of optical submarine cables is often shared between different telecommunication service providers. An optical submarine cable typically comprises a plurality of fiber pairs (each fiber pair comprising two fibers for two transmission directions, respectively). Usually, the plurality of fiber pairs is shared such that the entire capacity of one fiber pair is used by a single service provider only. In this case, other service providers typically do not have access to the fiber pair of the single service provider using this fiber pair.

However, in certain cases, the capacity of a single fiber pair may be shared between different operators or service providers. Typically wavelength division multiplexed (WDM) signals are transmitted over a fiber pair. A wavelength add-drop branching unit may be inserted into the optical transmission system, thereby enabling the extraction and the adding of particular wavelengths from and/or to a WDM signal carried on the fiber pair. The branching unit is an equipment which acts as a node between the different ends of a submarine cable. The branching unit may be implemented as an electrical node and/or as an optical node. When using a branching unit, some wavelengths of the WDM signal may be re-routed towards a branch station, whereas the other wavelengths of the WDM signal may be transmitted along the trunk towards the "main" stations of the optical transmission system. As such, a branching unit may be used for extracting a particular wavelengths or a plurality of particular wavelengths and for routing the extracted wavelength(s) on another cable to a different destination.

US Patent Application US 2002/0057477 A1 relates to an underwater optical transmission system. The system comprises a first and a second terminal transmission station and a branching unit located between said first and second terminal stations. By means of a switching module having a first optical switch, different switching states realizing optical communication links between the first and a second terminal transmission station and a branching unit can be obtained.

European Patent Application EP 1 598 960 A1 discloses an optical transmission system with a branch station comprising an optical amplifier section. The branch station performs non-repeated communication with an optical branching point and includes a light pumping section for causing pump light to enter an optical fiber through which a branched, receiving optical signal flows, to perform optical amplification by using the fiber as an amplification medium.

### SUMMARY

In todays optical submarine transmission networks, the bandwidth of repeaters arranged along a transmission path of the optical transmission network is typically so large that, with the hypothesis that all repeaters are identical along the transmission path, and due to the large number of repeaters along a submarine line, one cannot simply extract one or more wavelengths and route the extracted one or more wavelengths to a different destination. Typically, the entire bandwidth of the WDM system must be loaded to ensure a good transmission of the repeaters.

The present document addresses the technical problem of faults occurring in optical transmission networks comprising one or more branch stations. In particular, the present document relates to faults occurring in optical submarine transmission networks which typically comprise a large number of repeaters with no active reshaping, thereby causing particular challenges with regards to the impacts caused by faults. A fault on a branch of the optical transmission network may impact the loading of the WDM signals carried on the optical transmission network, thereby impacting the transmission quality of the WDM signals. In particular, a fault on a branch of an optical submarine cable may impact the loading of a WDM signal carried on the optical submarine cable. As such, a fault on a branch of the optical submarine cable may impact the performance of the entire optical submarine cable. The present document describes a branching unit which is configured to reduce and/or eliminate the negative impacts of an electrical fault on a branch of an optical transmission line on the remaining traffic of the optical transmission line.

The invention is solely defined by the appended claims. Embodiments or aspects not falling within the scope of the appended claims are to regarded merely as examples useful for understanding the invention.

According to an aspect a branching unit for an optical transmission system according to claim 1, notably for an optical submarine transmission system, is described. The branching unit may be configured for submarine applications. More generally, the branching unit may be configured for applications where the powering of the branching unit is provided through an optical cable which is connected to the branching unit. In particular, the branching unit may be configured to drop one or more fibers or one or more wavelengths of a fiber from a trunk cable and/or to add one or more fibers or one or more wavelengths of a fiber to the trunk cable. The dropped and/or added fiber(s) or wavelength(s) may be provided to and/or received from a branch cable. The branching unit may be configured to increase the capacity and/or to reduce the distortion within the optical transmission system caused by a fault on the trunk cable and/or on the branch cable.

The branching unit comprises a first and a second input port configured to be coupled to a first and a second incoming fiber, respectively. The first incoming fiber may be part of a first optical cable (e.g. the trunk cable) and the second incoming fiber may be part of another optical cable (e.g. the branch cable), wherein the another optical cable is referred to herein briefly as "the optical cable". Furthermore, the branching unit may comprise a first output port configured to be coupled to a first outgoing fiber. The first outgoing fiber may be part of a second optical cable (which may correspond to the trunk cable). By way of example, the branching unit may be configured to receive two ends of a trunk cable (e.g. a submarine cable) as well as an end of a branch cable (e.g. a submarine cable).

As indicated above, the second incoming fiber is part of an optical cable (referred to in the claims as "the optical cable"). The optical cable comprises an electrical conductor. In practice, the electrical conductor may be an electrically conductive layer. In particular, the optical cable may comprise a conductive layer surrounding a plurality of optical fiber pairs (including the second incoming fiber). The optical cable may originate from a terminal or station of the optical transmission system. The branching unit may be configured to receive electrical power via the optical cable. The electrical power may be provided by the terminal to the branching unit via the optical cable. The electrical power may be provided as a continuous direct current. In other words, the optical cable may be connectable at one end to a terminal of the optical transmission system configured for providing continuous direct current electrical power to the branching unit via the optical cable. The other end of the optical cable may be connectable to the branching unit.

Furthermore, the branching unit comprises an optical by-pass switch configured to switch between a first mode or a powered mode (also referred to as a powered state), and a second mode or an un-powered mode (also referred to as an un-powered state). The first mode is a powered mode of the optical by-pass switch, wherein in the powered mode the optical by-pass switch receives electrical power via the optical cable above a power threshold. The second mode is an un-powered mode of the optical by-pass switch, wherein in the un-powered mode, the optical by-pass switch receives electrical power via the optical cable below the power threshold. In other words, the first mode is a powered mode of the optical by-pass switch, subject to the optical by-pass switch receiving electrical power via the optical cable above a power threshold. The second mode is an un-powered mode of the optical by-pass switch, subject to the optical by-pass switch receiving electrical power via the optical cable below the power threshold.

The optical by-pass switch may be configured to receive power only via the optical cable. As such, an interruption of the power on the optical cable may trigger the by-pass switch to go from the powered mode to the un-powered mode (and vice versa). Hence, the interruption of the electrical power may impact the optical configuration of the branching unit (and of the optical transmission system). The by-pass switch may be configured to go into the un-powered mode, when it does not receive any or not sufficient power (i.e. power which is below the power threshold). As such, the un-powered mode may be the default state of the by-pass switch when not receiving power via the optical cable. The power received via the optical cable may be used to put the by-pass switch into the powered mode, thereby providing the default optical configuration of the branching unit.

In the first mode, the by-pass switch may be configured to couple the second incoming fiber to the first outgoing fiber and, in the second mode, the by-pass switch may be configured to couple the first incoming fiber to the first outgoing fiber. Typically, the coupling is exclusive, meaning that in the first mode, the by-pass switch couples only the second incoming fiber to the first outgoing fiber (and not the first incoming fiber) and that in the second mode, the by-pass switch couples only the first incoming fiber to the first outgoing fiber (and not the second incoming fiber).

As a result of using the by-pass switch which is powered by the optical cable comprising the second incoming fiber, an electrical fault on the optical cable (caused e.g. by a cable cut or by non-operation of the powering terminal of the optical cable) triggers an optical re-configuration in the branching unit, by coupling the first incoming fiber to the first outgoing fiber (instead of the second incoming fiber). By doing this, the capacity of the optical transmission system can be increased as traffic coming from the first incoming fiber can take over the capacity of the second incoming fiber. Alternatively or in addition, in case of WDM (wavelength division multiplex) systems, the distortions on the WDM signal in the first outgoing fiber can be reduced, because missing wavelengths from the second incoming fiber can be filled up by corresponding wavelengths from the first incoming fiber, thereby ensuring that the WDM signal on the first outgoing fiber is fully loaded (also in case of a fault on the optical cable comprising the second incoming fiber).

The branching unit may comprise a second output port configured to be coupled to a second outgoing fiber. The second outgoing fiber may be part of the optical cable (comprising the second incoming fiber). In particular, the second incoming fiber and the second outgoing fiber may form a fiber pair of the plurality of fiber pairs of the optical cable. The by-pass switch may be configured to couple the first incoming fiber to the second outgoing fiber, when in the first mode. Furthermore, the by-pass switch may be configured to couple the second incoming fiber to an open loop, when in the second mode.

By way of example, the by-pass switch may comprise a first and a second input interface and a first and a second output interface. In particular, the by-pass switch may comprise only the above mentioned four interfaces and may provide switching between different pairs of input and output interfaces. The first input interface may be coupled to the first incoming fiber and the second input interface may be coupled to the second incoming fiber. The first output interface may be coupled to the second outgoing fiber and the second output interface may be coupled to the first outgoing fiber. The by-pass switch may be configured to couple the first input interface to the first output interface and the second input interface to the second output interface, when in the power mode. Furthermore, the by-pass switch may be configured to couple the first input interface to the second output interface, when in the second mode. In addition, when in the second mode, the second input interface may be coupled to an open loop or to the first output interface.

As indicated above, the first incoming fiber may be part of a first optical cable (different from the "optical cable") comprising an electrically conductive layer. The branching unit may comprise a corresponding first optical by-pass switch (different from "the optical by-pass switch" corresponding to "the optical cable"). The first optical by-pass switch may be powered via the first optical cable. The first optical by-pass switch may be configured to pass some or all of the wavelengths carried on the second incoming fiber to some or all of the corresponding wavelengths carried on the first outgoing fiber, when in the second mode. Furthermore, the first optical by-pass switch may be configured to pass some or all of the wavelengths carried on the first incoming fiber to the some or all of the corresponding wavelengths carried on the first outgoing fiber, and some or all of the wavelengths carried on the second incoming fiber to the some or all of the corresponding wavelengths carried on the second outgoing fiber when in the first mode. Hence, the branching unit may comprise a dedicted first by-pass switch to protect the optical transmission systems from faults on the first optical cable.

In more general terms, the branching unit may comprise a plurality of optical by-pass switches for a corresponding plurality of optical cables connectable to the branching unit. In particular, the branching unit may comprise optical by-pass switches to protect the transmission system from faults on some or all of the optical cables connectable to the branching unit. At least one of (possibly each of) the by-pass switches of the plurality of by-pass switches may be electrically powered using electrical power provided via the corresponding optical cable of the plurality of optical cables. In other words, a by-pass switch may receive electrical power (only) from the optical cable, a fault of which the by-pass switch is to compensate. At least one of (possibly each of) the plurality of by-pass switches may provide a first mode and a second mode. As a result, a fault of the electrical power provided by an optical cable triggers the corresponding one or more by-pass switches to go from the first mode to the second mode, thereby triggering a re-configuration of the optical network.

The plurality of by-pass switches may be arranged (or may be configured) such that in case of an interruption of the electrical power on one of the plurality of optical cables, an optical signal provided by the one of the plurality of optical cables is replaced by an optical signal provided by another one of the plurality of optical cables. In particular, the plurality of by-pass switches may be arranged (or may be configured) such that in case of an interruption of the electrical power on one of the plurality of optical cables, the WDM wavelengths provided by the one of the plurality of optical cables is replaced by corresponding WDM wavelengths provided by another one of the plurality of optical cables, such that all the outgoing fibers from the branching unit are fully loaded (except the outgoing fiber(s) of the optical cable with the interrupted electrical power).

As indicated above, the plurality of optical cables typically comprise a plurality of fiber pairs. A fiber pair comprises an incoming fiber to and an outgoing fiber from the branching unit. The branching unit may comprise one or more by-pass switches for the one or more fiber pairs of the plurality of fiber pairs, which are partially or completely dropped in the branching unit. In particular, the branching unit may comprise one by-pass switch for each incoming fiber being (completely or partially) dropped and one by-pass switch for each outgoing fiber being (completely or partially) added. By doing this, it can be ensured that a fault on any of the plurality of optical cables can be compensated.

As already mentioned, the first and second, incoming and outgoing, fibers are configured to transmit wavelength division multiplex (WDM) signals comprising a plurality of wavelengths. The branching unit comprises a first WDM drop unit configured to extract a first set of wavelengths from the first incoming fiber. Furthermore, the branching unit comprises a second WDM drop unit configured to extract the first set of wavelengths from the second incoming fiber. In addition, the branching unit comprises a first WDM add unit configured to add the first set of wavelengths to the first outgoing fiber. The WDM drop / add units may comprise WDM filters configured to extract / insert respective sets of wavelengths from / to a WDM signal carried on the respective fiber.

The by-pass switch (corresponding to the optical cable comprising the second incoming fiber) is configured to pass the first set of wavelengths of the second incoming fiber to the first set of wavelengths of the first outgoing fiber, when in the first mode. Furthermore, the by-pass switch is configured to pass the first set of wavelengths of the first incoming fiber to the first set of wavelengths of the first outgoing fiber, when in the second mode. In other words, the branching unit may be configured to add the first set of wavelengths carried on the second incoming fiber to the WDM signal carried on the first outgoing fiber (when the branching unit is in a default mode). However, when a power interruption occurs on the optical cable comprising the second incoming fiber, the corresponding by-pass switch goes into the second mode, thereby replacing the first set of wavelengths carried on the second incoming fiber by the corresponding first set of wavelengths carried on the first incoming fiber. As a result, it can be ensured that the WDM signal carried on the first outgoing fiber is fully loaded, thereby reducing distortions incurred within the optical transmission system.

The branching unit may be configured to forward a second set of wavelengths of the first incoming fiber to the second set of wavelengths of the first outgoing fiber. The second set of wavelengths may be complementary to the first set of wavelengths. In particular, the second set of wavelengths may comprise those wavelengths of the WDM signal which are not comprised within the first set of wavelengths. In other words, the first set of wavelengths and the complementary second set of wavelengths may yield the complete set of WDM wavelengths. In more general terms, the first and second sets of wavelengths may be complementary in the sense that wavelengths which are comprised in the first set are not comprised in the second set and vice versa.

As such, the WDM signal carried on the first outgoing fiber may comprise the first set of wavelengths carried on the second incoming fiber and the second set of wavelengths carried on the first incoming fiber, when the by-pass switch is in the first mode. On the other hand, when the by-pass switch is in the second mode, the WDM signal carried on the first outgoing fiber may comprise the first set and second set of wavelengths carried on the first incoming fiber. As a result, it is ensured that the first outgoing fiber always carries a fully loaded WDM signal (even in case of a fault on the optical cable comprising the second incoming fiber).

As such, the by-pass switch may be configured to pass some or all of the wavelengths carried on the second incoming fiber to some or all of corresponding wavelengths carried on the first outgoing fiber, when in the first mode. Furthermore, the by-pass switch may be configured to pass some or all of the wavelengths carried on the first incoming fiber to the some or all of the corresponding wavelengths carried on the first outgoing fiber, when in the second mode, thereby replacing the some or all of the wavelengths carried on the second incoming fiber in the optical signal carried on the first outgoing optical fiber.

The by-pass switch may comprise or may be implemented as an optical electro-mechanical switch, e.g. an opto-mechanical relay actuator. Furthermore, the by-pass switch may be Telcordia RS-1221 compliant. It is preferred that the by-pass switch is selected such that a relatively high reliability needed for submarine applications is ensured.

The branching unit may further comprise an electrical low pass filtering unit configured to low pass filter the electrical power received via the optical cable. The low pass filtering unit may comprise e.g. an inductance. The low pass filtering unit may be configured to remove variations comprised within the current provided via the optical cable to the corresponding by-pass switch. By doing this, an instable switching of the by-pass switch may be avoided.

According to another aspect, a method according to claim 13 for protecting wavelength division multiplex (WDM) channels carried on a first outgoing fiber from faults on a second incoming fiber is described. In particular, the method is directed at protecting those WDM channels on the first outgoing fiber which are not contributed by the second incoming fiber. A fault on the second incoming fiber may cause the WDM signal on the first outgoing fiber to be partially un-loaded, due to missing WDM channels contributed by the second incoming fiber. In the present document, it is proposed to automatically replace the missing WDM channels by corresponding WDM channels carried on another incoming fiber and available at the branching unit which executes the method. By doing this, the WDM signal of the first outgoing fiber is fully loaded, thereby protecting the WDM channels on the first outgoing fiber, which are not contributed by the second incoming fiber, from distortions incurred in a repeater which amplifies the WDM signal of the first outgoing fiber.

The method comprises extracting a second set of wavelengths on a first incoming fiber and passing the second set of wavelengths to corresponding wavelengths on the first outgoing fiber. Furthermore, the method comprises extracting a first set of wavelengths on the first incoming fiber, wherein the first set of wavelengths is typically complementary to the second set of wavelengths. The first set of wavelengths is typically dropped at the branching unit. The method further comprises extracting the first set of wavelengths on the second incoming fiber. The first set of wavelength on the second incoming fiber is typically added to the first outgoing fiber at the branching unit. The second incoming fiber may be part of an optical cable comprising an electrical conductor, e.g. an electrically conductive layer.

The method comprises passing the first set of wavelengths on the second incoming fiber to the corresponding wavelengths on the first outgoing fiber, if electrical power received via the optical cable is above a power threshold. On the other hand, the method comprises passing the first set of wavelengths on the first incoming fiber to the corresponding wavelengths on the first outgoing fiber, if the electrical power received via the optical cable is below the power threshold. As such, it is ensured that the WDM signal on the first outgoing fiber is fully loaded, even in case of a fault on the optical cable comprising the second incoming fiber.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

### BRIEF DESCRIPTION OF THE DRAWIGS

The invention is explained below in an exemplary manner with reference to the accompanying drawings, wherein
Fig. 1 shows a block diagram of an example optical transmission line comprising a branching unit with optical filtering;
Fig. 2 shows a block diagram of an example branching unit comprising optical by-pass switches; and
Fig. 3 shows a block diagram of an example branching unit which is configured to compensate the faults on each of the branches of the branching unit.

### DETAILED DESCRIPTION

As outlined in the introductory section, optical submarine transmission networks may comprise one or more branching units, thereby enabling operators to share the fiber pairs of an optical transmission cable. In particular, a plurality of operators may use the wavelengths of a WDM signal transmitted within a single fiber pair. A branching unit may comprise add-drop nodes to extract and/or to add wavelengths from and/or to the fiber pair.

The optical spectra coming from different directions within the optical transmission network may be filtered and combined at an add-drop node, in order to transmit the combined wavelengths to different stations or endpoints within the optical transmission network. Problems may occur in the add-drop nodes in case of cable faults. Typically, a branch of the network is electrically powered using single-end feeding, with one end being located at the sea-ground. In case of a cable cut within the branch, the branch becomes partially de-powered, and the add-drop node is not receiving the spectrum anymore from the branch station. As a consequence, the optical spectrum transmitted from the branching unit to the main stations becomes partially emptied, which may create traffic disruption on the whole bandwidth, as the repeaters are not designed to work with sub-equipped bandwidth.

This problem can in some cases be solved with an electrical re-configuration of the branching unit. However, this solution implies that during a non-negligible time period, an error on the branch cable (e.g. a cable cut) strongly impacts the traffic along the trunk cable, which is typically not acceptable for the operators sharing a fiber pair of the trunk cable.

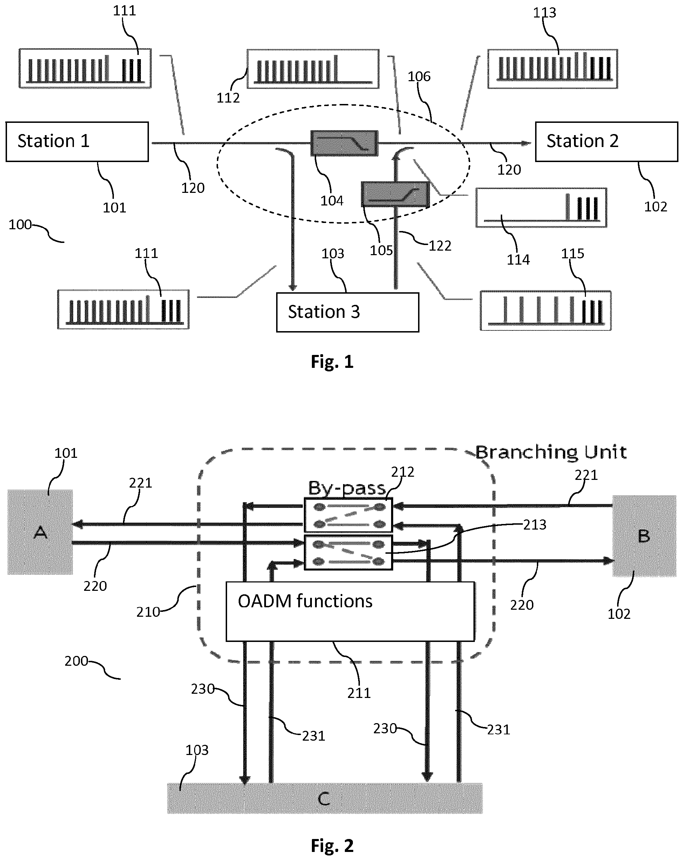

Fig. 1 shows an optical transmission system 100 comprising main stations 101 and 102, as well as a branch station 103. Furthermore, a branching unit 106 comprising two add-drop nodes 104, 105 is illustrated. The first main station 101 transmits a first WDM signal 111 which is transmitted on the trunk cable 120 to the branching unit 106. The branching unit 106 is configured to forward the WDM signal 111 unmodified to the branch station 103. Furthermore, the branching unit 106 is configured to add a portion 114 of the third WDM signal 115 transmitted by the branch station 103 to a portion 112 of the first WDM signal 111, thereby yielding the second WDM signal 113 which is transmitted to the second main station 102. It can be seen that in case of a cable cut on the branch cable 122, the portion 114 of the third WDM signal 115 is missing in the second WDM signal 113, such that only the partial WDM signal 112 is transmitted on the trunk cable 120 to the second main station 102. This typically impacts the performance of the repeaters placed along the trunk cable. In particular, the transmission of a partially unloaded WDM signal 112 typically reduces bit error rate on the loaded wavelengths of the partially unloaded WDM signal 112.

It is expected that the above mentioned problem becomes even more severe in future generations of branching units 106, where optical add-drop re-configurations are possible, and where relatively high losses due to add-drop filtering are typically compensated by the use of optical amplifiers combined with the re-configuration functions. Consequently, in order to house the reconfiguration and amplification functions, a new physical equipment may need to be inserted on the cable 122. This equipment may be placed within the branch, close to the branching unit 106, allowing an operator to add further add-drop functions on unequipped branches of the network 100 along the system life. This new equipment is expected to be powered from the branch station 103, and the whole traffic (including the traffic on the trunk cable 120) is routed through this new equipment. Therefore, a power fault on the branch cable 122 may lead to a complete cut of all the traffic in the transmission network 100.

In case of fixed add-drop functions, where powering is typically not needed to perform the optical add-drop function within a node 104, 105, cable cuts may be addressed by re-configuring electrically the branching unit 106 to power as many of the branch repeaters as possible, thereby creating optical noise that can compensate for the missing channels. However, the implementation of this solution typically takes a long time to identify the fault in the branch and to reconfigure the branching unit 106 following the proper power sequences. This typically leads to a traffic interruption of one hour or more. The present document describes a branching unit which is configured to automatically and instantly react to faults within a branch of the optical transmission network 100.

Moreover, for long transmission links as encountered for transatlantic and/or transpacific cables, depending on the position of the cable fault in the branch, there may be cases where traffic cannot be recovered or where the quality of transmission is highly impacted, if the spectrum of a WDM signal 113 is partially emptied. As such, it is desirable to provide a branching unit 106 which is configured to compensate a fault on a branch of the network 100 permanently until the fault on the branch is located and fixed.

In the present document, the use of one or more by-pass functions is proposed, in order to address the above mentioned technical problems. In particular, it is proposed to house within a branching unit 106 an independent function called the by-pass function. The by-pass function may be provided with an independent powering circuit. The independent power circuit preferably uses only the branch line current which is electrically un-latched. The branch line current changes the optical state in case of a branch power disruption, thereby allowing to by-pass the optical add-drop functions.

This approach may be used for each cable end on the branching unit 106, considering each cable end as a "branch", so that a fault on any one of the cable ends does not disturb the traffic between the two remaining cable ends.

The by-pass function is configured to link the optical configuration of the transmission system to the electrical powering configuration. This is in contrast to current network designs, where the optical configuration is completely separated from the electrical powering configuration. Typically, operator analysis is needed to perform the required operations when optical configuration is impacted by an electrical fault. In the present document, a by-pass function is proposed which is triggered by a fault on the electrical powering configuration and which - subject to triggering - impacts the optical configuration of the network 100.

As indicated above, submarine cables are typically equipped with optical fiber repeaters at a pre-determined distance. Such repeaters may use an optical amplifier, usually an Erbium-doped fiber amplifier. Each repeater typically comprises separate equipment for each fiber. This equipment comprises signal reforming, and controls. An amplifier dispatches the signal into the next length of fiber. The laser (e.g. a laser diode) excites a short length of doped fiber that itself acts as a laser amplifier. As the light passes through the fiber, it is amplified. Repeaters are typically configured to amplify wavelength-division multiplexed signals. However, repeaters typically insert noise into unloaded portions of a WDM signal and thereby impact the transmission quality of the loaded portions of the WDM signal.

Repeaters are usually powered by a constant direct current passed down a conductor near the center of the submarine cable 120, 122, so all repeaters in a cable are typically arranged in series. Power feed equipment is installed at the terminal stations 101, 102, 103 to provide the constant direct current for the repeaters. Typically, both ends of a cable share the current generation with one end providing a positive voltage and the other end providing a negative voltage. A virtual earth point may exist roughly halfway along the cable under normal operation. The amplifiers and/or repeaters derive their power from the potential difference across the amplifiers and/or repeaters. The constant direct current provided with the cable 120, 122 is typically also used to power the one or more branching units 106 along the cable 120, 122.

In the present document, it is proposed to detect a cable fault (e.g. a cable cut) in the electrical domain. If a fault is detected in the electrical domain, optical by-pass switches are activated to reconfigure the branching unit 106, such that the branching unit 106 provides WDM signals having complete spectra. As a result, the traffic on the trunk cable 120 is not affected by a fault on the branch cable 122.

Optically, the by-pass function may be performed by an optical electro-mechanical switch, chosen from different possible technologies for its high reliability and low wavelength and temperature dependent losses. Typically, a single switch is used to commute fibres in one way on the trunk, as shown on the Fig. 2. Fig. 2 shows an optical transmission network 200 comprising the main terminals (also referred to as stations) 101, 102 and the branch terminal 103. Furthermore, the network 200 comprises a branching unit 210 which is configured to add/drop one or more wavelengths of a trunk fiber pair 220, 221 using the OADM (optical add drop multiplex) functions 211. The by-pass switches 212, 213 may be used to by-pass the OADM functions 211 in case of a fault on the branch fiber pair 230, 231. As a result, the complete WDM signal coming from main terminal 101 is transmitted to the main terminal 102. The drop function and the add function is by-passed using the by-pass switch 213. In a similar manner, the complete WDM signal coming from main terminal 102 is transmitted to the main terminal 101. The drop function and the add function is by-passed using the by-pass switch 212.

The electrical powering may be submitted to instabilities (e.g. unstable power faults). Such instabilities could cause the by-pass switch to commute back and forth many times. A low pass filtering of the current provided on the cables may be used to remove such instabilities in electrical powering, thereby ensuring a stable operation of the by-pass switches. The low pass filtering may be based on the addition of an inductance in the power circuit, thereby avoiding uncontrolled switching of the by-pass switches 212, 213 in case of unstable power faults.

By-pass switches 212, 213 may use one or more of the following technologies:
- Magneto-Optic switches: The switching is performed by reversing the saturated magnetization of the YIG (Yttrium iron garnet) garnet of the switch through a semi-hard magnetic material electromagnet. The two saturated states remain stable until a reciprocally electric pulse is applied. This technology provides highly reliable optical switching, as it does not involve any moving parts. On the other hand, this technology is typically not bi-directional and exhibits a relatively high wavelength and temperature dependent loss. Furthermore, at the moment only latching products exist.
- Opto-Mechanical Relay actuators: Opto-mechanical switches utilize motion created with a relay and moving parts to implement optical switching. An example is the moving fibre technology. Alternatively, a moving deflector comprising a moving mirror or prism may be used to reconfigure optical connections. This technology typically provides a high reliability and a relatively low wavelength and/or temperature dependent loss. Furthermore, latching and non-latching by-pass switches may be provided using this technology.
- Opto-Mechanical Micro-Electro Mechanical (MEMS) switches: The switching is provided by a moving fibre or a moving mirror, prism or waveguide. The actuation may be performed via a MEMS which uses electromagnetism, electrostatic attraction, or thermal expansion. The MEMS based technology offers the possibility of reducing the size, cost, and the ability to manufacture large arrays and complex networks of switching elements.
- MZ (Mach Zehnder)-electro-optics: MZ-based devices modify the phase difference between the light propagating in the two branches of the MZ structure.
- Liquid crystal technology: liquid crystal cells can rotate the polarization of light when a voltage is applied. This technology is used e.g. in ROADM (Reconfigurable OADM) modules.
- Acousto-optic technology: A light beam interacts with travelling acoustic waves in a transparent material such as glass.

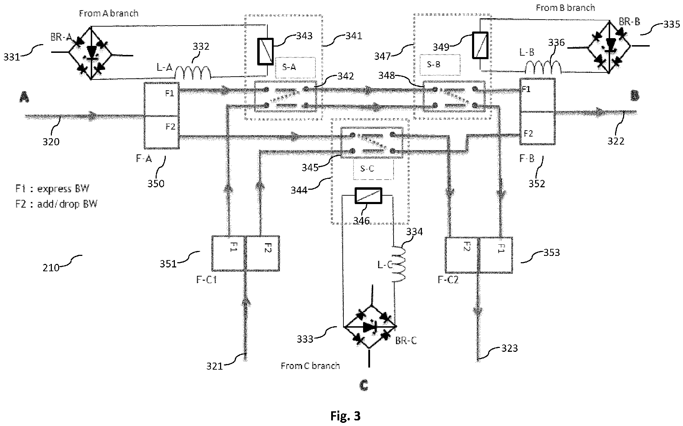

An illustration of a fully symmetrical implementation of a branching unit 210, which allows protecting the traffic between any two ends against an electrical fault on the third end of the branching unit 210 is provided in Fig. 3. Fig. 3 illustrates an incoming trunk fiber 320 (coming from terminal A) and an outgoing trunk fiber 322 (going to terminal B) of the branching unit 210. Furthermore, Fig. 3 shows the incoming branch fiber 321 (coming from terminal C) and the outgoing branch fiber 323 (going to terminal C). The branching unit 210 is configured to compensate a fault on any of the fibers 320, 321, 322, 323.

The branching unit 210 of Fig. 3 comprises OADM functions 350, 351, 352, 353 configured to extract one or more wavelengths from the incoming trunk fiber 320, and to pass them to one or more corresponding wavelengths on the outgoing branch fiber 323. The OADM functions 350, 351, 352, 353 are further configured to add one or more wavelengths from the incoming branch fiber 321 onto the outgoing trunk fiber 322 and/or onto the outgoing branch fiber 323. For this purpose, the OADM functions 350, 351, 352, 353 comprise filter elements 350, 351, 352, 353 allowing to perform the add & drop function between the A-B trunk 320, 322 and the C branch 321, 323. Each filter element may comprise an express bandwidth filter F1 (which lets pass only the wavelengths which are passed through on the A-B trunk 320, 322 or on the C branch 321, 323, respectively). Furthermore, each filter element may comprise an add/drop bandwidth filter F2 (which lets pass only the wavelengths which are dropped and/or added from and/or to the A-B trunk 320, 322, as well as from and/or to the C branch 321, 323).

Furthermore, Fig. 3 illustrates the powering circuits 331, 335, 333 of the branches A, B, C, respectively. The powering circuits 331, 335, 333 may provide power via the optical transmission cables comprising the fibers 320, 321, 322, 323, respectively, to the branching unit 210. As such, the power circuit 331 provides power from the terminal A via the cable comprising the incoming trunk fiber 320, the power circuit 335 provides power from the terminal B via the cable comprising the outgoing trunk fiber 322, and the power circuit 333 provides power from the terminal C via the cable comprising the branch fibers 321, 323.

The powering circuits 331, 335, 333 are used to power the by-pass functions 341, 347, 344 of the branching unit 210, respectively. The by-pass functions 341, 347, 344 comprise respective drive units 343, 349, 346 for the optical by-pass switches 342, 348, 345. The powering circuits 331, 335, 333 are associated in a one-to-one relationship to each of the optical by-pass switches 342, 348, 345, in order to commute the by-pass switches 342, 348, 345 as soon as an electrical fault occurs on the respective cable. The powering circuits 331, 335, 333 may comprise inductances 332, 336, 334 (or other low pass filtering means) which are configured to reduce the impact of an unstable electrical fault on the traffic.

It should be noted that the optical topology shown in Fig. 3 represents only one fiber direction from the terminal A to the terminal B. The optical topology for the inverse fiber going from terminal B to terminal A is symmetrical, and comprises similar components as illustrated in Fig. 3. The optical by-pass switches for the inverse direction may be powered by the same powering circuits 331, 335, 333.

In case of an electrical fault on the branch cable between the branching unit 210 and the terminal C, the powering circuit 333 ceases to provide electrical power to the corresponding by-pass switch 345. As a result of this, the by-pass switch 345 switches from its powered mode (which is illustrated by the firm lines in Fig. 3) into its unpowered mode (which is illustrated by the dotted lines in Fig. 3). This means that the dropped wavelengths from the incoming trunk fiber 320 are fed back into the added wavelengths on the outgoing trunk fiber 322. At the same time, the to-be-added wavelengths from the incoming branch fiber 321 are decoupled from the outgoing trunk fiber 322. As a consequence, it is ensured that the WDM spectrum of the outgoing trunk fiber 322 is fully loaded, even in case of a fault on the branch from terminal C. Hence, it is ensured that the fault on the branch from terminal C does not influence the transmission quality of the express wavelengths on the trunk fiber.

It should be noted that the by-pass switches 342, 348, 345 may also be used in case of a so called fiber-drop scenario, where entire fibers of an optical cable are dropped and/or added at a branching unit 210. By doing this, fibers which are to be dropped to a terminal C may be used for the communication between terminal A and B, if there is a cable cut between the branching unit 210 and the terminal C or if terminal C has not yet started operation. The fiber-drop scenario may be implemented as illustrated in Fig. 3, however, without the need for OADM functions 350, 351, 352, 353. In this case, it is assumed that the incoming trunk fiber 320 is directly linked to the fiber at the output of the filter F2 of filter unit 350, that the fiber at the input to the filter F2 of the filter unit 352 is directly linked to the outgoing trunk fiber 322, that the incoming branch fiber 321 is directly linked to the fiber at the output of the filter F2 of filter unit 351, and that the fiber at the input to the filter F2 of the filter unit 353 is directly linked to the outgoing branch fiber 323.

The use of by-pass switches 342, 345, 348 is beneficial in that it ensures immediate restoration of traffic in case of a fault, within an OADM system. The use of by-pass switches 342, 345, 348 is highly reliable, which makes it a unique solution for use in submarine submerged products, designed for a long lifetime such as 25 years or more. In other words, the benefit of providing a branching unit which comprises optical by-pass switches is to ensure automatic and almost immediate restoration of the traffic in case of a cable power fault in a cable system where branches are using add-drop wavelengths. The proposed solution is highly reliable as it uses a minimum number of additional components, and as the additional components have good reliability performance.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A branching unit (210) for an optical transmission system (200), the branching unit (210) comprising
- a first and a second input port configured to be coupled to a first and a second incoming fiber (320, 321), respectively;
- a first output port configured to be coupled to a first outgoing fiber (322); wherein the second incoming fiber (321) is part of an optical cable comprising an electrical conductor; wherein the branching unit (210) is configured to receive electrical power via the optical cable; and
- an optical by-pass switch (345) configured to switch between a first mode and a second mode; wherein in the first mode, the by-pass switch (345) is configured to couple the second incoming fiber (321) to the first outgoing fiber (322); and wherein in the second mode, the by-pass switch (345) is configured to couple the first incoming fiber (320) to the first outgoing fiber (322);
- wherein
- the first and second incoming fiber and the first outgoing fiber (320, 321, 322) are configured to transmit wavelength division multiplex, WDM, signals comprising a plurality of wavelengths;
- the branching unit (210) further comprises a first WDM drop unit (350) configured to extract a first set of wavelengths from the first incoming fiber (320); a second WDM drop unit (351) configured to extract the first set of wavelengths from the second incoming fiber (321); and a first WDM add unit (352) configured to add the first set of wavelengths to the first outgoing fiber (322); and
- the optical by-pass switch (345) is configured to pass the first set of wavelengths from the second incoming fiber (321) to the first set of wavelengths of the first outgoing fiber (322), when in the first mode; and to pass the first set of wavelengths from the first incoming fiber (320) to the first set of wavelengths of the first outgoing fiber (322), when in the second mode;
wherein the first mode is a powered mode of the optical by-pass switch (345), subject to the optical by-pass switch (345) receiving electrical power via the optical cable above a power threshold, and wherein the second mode is an un-powered mode of the optical by-pass switch (345), subject to the optical by-pass switch (345) receiving no electrical power via the optical cable or electrical power below the power threshold.

2. The branching unit (210) of claim 1, wherein
- the branching unit (210) is configured to forward a second set of wavelengths of the first incoming fiber (320) to the second set of wavelengths of the first outgoing fiber (322); and
- the second set of wavelengths is complementary to the first set of wavelengths.

3. The branching unit (210) of any previous claim, wherein
- the optical by-pass switch (345) comprises a first and second input interface and a first and second output interface;
- the first input interface is coupled to the first incoming fiber (320);
- the second input interface is coupled to the second incoming fiber (321);
- the first output interface is coupled to a second outgoing fiber (323);
- the second output interface is coupled to the first outgoing fiber (322);
- in the first mode, the first input interface is coupled to the first output interface and the second input interface is coupled to the second output interface; and
- in the second mode, the first input interface is coupled to the second output interface.

4. The branching unit (210) of any previous claim, wherein the optical by-pass switch (345) comprises an optical electro-mechanical switch.

5. The branching unit (210) of any previous claim, wherein the optical by-pass switch (345) is configured to
- pass some or all of wavelengths carried on the second incoming fiber (321) to some or all of corresponding wavelengths carried on the first outgoing fiber (322), when in the first mode; and
- pass some or all of wavelengths carried on the first incoming fiber (320) to the some or all of the corresponding wavelengths carried on the first outgoing fiber (322), when in the second mode.

6. The branching unit (210) of any previous claim, further comprising an electrical low pass filtering unit (334) configured to low pass filter the electrical power received via the optical cable.

7. The branching unit (210) of any previous claim, wherein
- the optical cable is connectable at one end to a terminal (103) of the optical transmission system (200) configured for providing continuous direct current electrical power to the branching unit (210) via the optical cable.

8. The branching unit (210) of any previous claim, wherein
- the optical cable is a submarine cable; and
- the branching unit (210) is configured for submarine applications.

9. The branching unit (210) of any previous claim, wherein
- the first incoming fiber (320) is part of a first optical cable comprising an electrical conductor;
- the branching unit (210) comprises a second optical by-pass switch (342) configured to be powered via the first optical cable; and
- the second optical by-pass switch (342) is configured to pass some or all of wavelengths carried on the second incoming fiber (321) to some or all of corresponding wavelengths carried on the first outgoing fiber (322), when in the second mode; and pass some or all of wavelengths carried on the first incoming fiber (320) to the some or all of the corresponding wavelengths carried on the first outgoing fiber (322), when in the first mode.

10. The branching unit (210) of any previous claim, wherein
- the branching unit (210) comprises a plurality of optical by-pass switches for a corresponding plurality of optical cables connectable to the branching unit (210);
- at least one of the optical by-pass switches of the plurality of optical by-pass switches is electrically powered using electrical power provided via the corresponding optical cable of the plurality of optical cables;
- at least one of the plurality of optical by-pass switches is configured for operating in the first mode or in the second mode;
- the plurality of optical by-pass switches are configured to operate such that in case of an interruption of the electrical power on one of the plurality of optical cables, an optical signal provided by the one of the plurality of optical cables is replaced by an optical signal provided by another one of the plurality of optical cables.

11. The branching unit (210) of claim 10, wherein
- the plurality of optical cables comprise a plurality of fiber pairs;
- a fiber pair comprises an incoming fiber to and an outgoing fiber from the branching unit (210);
- the branching unit (210) comprises one or more by-pass switches for at least one fiber pair of the plurality of fiber pairs, which is configured to be partially or completely dropped in the branching unit (210).

12. The branching unit (210) of any previous claim, wherein
- the branching unit (210) comprises a second output port configured to be coupled to a second outgoing fiber (323);
- the second outgoing fiber (323) is part of the optical cable; and
- in the first mode, the optical by-pass switch (345) is configured to couple the first incoming fiber (320) to the second outgoing fiber (323).

13. A method for protecting in a branching unit (210) wavelength division multiplex, referred to as WDM, channels on a first outgoing fiber (322) coupled to a first output port of the branching unit (210) from faults on a second incoming fiber (321) coupled to a second input port of the branching unit (210); the method comprising
- extracting, by a first WDM drop unit (350) comprised in the branching unit (210), a second set of wavelengths on a first incoming fiber (320) and passing the second set of wavelengths to corresponding wavelengths on the first outgoing fiber (322);
- extracting, by the first WDM drop unit (350) comprised in the branching unit (210), a first set of wavelengths on the first incoming fiber (320); wherein the first set of wavelengths is complementary to the second set of wavelengths;
- extracting, by a second WDM drop unit (351) comprised in the branching unit (210), the first set of wavelengths on the second incoming fiber (321); wherein the second incoming fiber (321) is part of an optical cable comprising an electrical conductor, the branching unit (210) receiving electrical power via the optical cable;
- in a first mode, passing by an optical by-pass switch (345), the optical by-pass switch (345) being comprised in the branching unit (210), the first set of wavelengths on the second incoming fiber (321) to the corresponding wavelengths on the first outgoing fiber (322), if electrical power received via the optical cable is above a power threshold;
- in a second mode, passing by an optical by-pass switch (345), the optical by-pass switch (345) being comprised in the branching unit (210), the first set of wavelengths on the first incoming fiber (320) to the corresponding wavelengths on the first outgoing fiber (322), if no electrical power is received via the optical cable or the received electrical power is below the power threshold.

## Patentansprüche

1. Verzweigungseinheit (210) für ein optisches Übertragungssystem (200), wobei die Verzweigungseinheit (210) umfasst:
- einen ersten und einen zweiten Eingangsport, die ausgelegt sind, mit einer ersten bzw. einer zweiten ankommenden Faser (320, 321) gekoppelt zu werden;
- einen ersten Ausgangsport, der ausgelegt ist, mit einer ersten ausgehenden Faser (322) gekoppelt zu werden; wobei die zweite ankommende Faser (321) ein Teil eines optischen Kabels ist, das einen elektrischen Leiter umfasst; wobei die Verzweigungseinheit (210) ausgelegt ist, elektrische Energie über das optische Kabel zu empfangen; und
- einen optischen Umgehungsschalter (345), der ausgelegt ist, zwischen einem ersten Modus und einem zweiten Modus umzuschalten; wobei in dem ersten Modus der Umgehungsschalter (345) ausgelegt ist, die zweite ankommende Faser (321) mit der ersten ausgehenden Faser (322) zu koppeln; und wobei in dem zweiten Modus der Umgehungsschalter (345) ausgelegt ist, die erste ankommende Faser (320) mit der ersten ausgehenden Faser (322) zu koppeln;
- wobei:
- die erste und zweite ankommende Faser und die erste ausgehende Faser (320, 321, 322) ausgelegt sind, Wellenlängen-Division-Multiplex-, WDM-, Signale zu übertragen, die eine Vielzahl von Wellenlängen umfassen;
- die Verzweigungseinheit (210) ferner eine erste WDM-Drop-Einheit (350) umfasst, die ausgelegt ist, einen ersten Satz von Wellenlängen aus der ersten ankommenden Faser (320) zu extrahieren; eine zweite WDM-Drop-Einheit (351), die ausgelegt ist, den ersten Satz von Wellenlängen aus der zweiten ankommenden Faser (321) zu extrahieren; und eine dritte WDM-Add-Einheit (352), die ausgelegt ist, den ersten Satz von Wellenlängen zu der ersten ausgehenden Faser (322) hinzuzufügen; und
- der optische Umgehungsschalter (345) ausgelegt ist, den ersten Satz von Wellenlängen aus der zweiten ankommenden Faser (321) zu dem ersten Satz von Wellenlängen der ersten ausgehenden Faser (322) zu führen, wenn im ersten Modus; und den ersten Satz von Wellenlängen aus der ersten ankommenden Faser (320) zu dem ersten Satz von Wellenlängen der ersten ausgehenden Faser (322) zu führen, wenn im zweiten Modus;
wobei der erste Modus ein Energiemodus des optischen Umgehungsschalters (345) ist, vorausgesetzt, dass der optische Umgehungsschalter (345) elektrische Energie über das optische Kabel über einer Energieschwelle empfängt, und wobei der zweite Modus ein Nicht-Energiemodus des optischen Umgehungsschalters (345) ist, vorausgesetzt, dass der optische Umgehungsschalter (345) keine elektrische Energie über das optische Kabel unter der Energieschwelle empfängt.

2. Verzweigungseinheit (210) nach Anspruch 1, wobei:
- die Verzweigungseinheit (210) ausgelegt ist, einen zweiten Satz von Wellenlängen der ersten ankommenden Faser (320) zu dem zweiten Satz von Wellenlängen der ersten ausgehenden Faser (322) weiterzuleiten; und
- der zweite Satz von Wellenlängen zu dem ersten Satz von Wellenlängen komplementär ist.

3. Verzweigungseinheit (210) nach einem der vorhergehenden Ansprüche, wobei:
- der optische Umgehungsschalter (345) eine erste und zweite Eingabeschnittstelle und eine erste und zweite Ausgabeschnittstelle umfasst;
- die erste Eingabeschnittstelle mit der ersten ankommenden Faser (320) gekoppelt ist;
- die zweite Eingabeschnittstelle mit der zweiten ankommenden Faser (321) gekoppelt ist;
- die erste Ausgabeschnittstelle mit einer zweiten ausgehenden Faser (323) gekoppelt ist;
- die zweite Ausgabeschnittstelle mit der ersten ausgehenden Faser (322) gekoppelt ist;
- in dem ersten Modus, die erste Eingabeschnittstelle mit der ersten Ausgabeschnittstelle gekoppelt ist, und die zweite Eingabeschnittstelle mit der zweiten Ausgabeschnittstelle gekoppelt ist; und
- in dem zweiten Modus, die erste Eingabeschnittstelle mit der zweiten Ausgabeschnittstelle gekoppelt ist.

4. Verzweigungseinheit (210) nach einem der vorhergehenden Ansprüche,
wobei der optische Umgehungsschalter (345) einen optischen elektromechanischen Schalter umfasst.

5. Verzweigungseinheit (210) nach einem der vorhergehenden Ansprüche,
wobei der optische Umgehungsschalter (345) ausgelegt ist:
- einige oder alle Wellenlängen, die auf der zweiten ankommenden Faser (321) getragen werden, zu einigen oder allen entsprechenden Wellenlängen zu führen, die auf der ersten ausgehenden Faser (322) getragen werden, wenn im ersten Modus; und
- einige oder alle Wellenlängen, die auf der ersten ankommenden Faser (320) getragen werden, zu einigen oder allen entsprechenden Wellenlängen zu führen, die auf der ersten ausgehenden Faser (322) getragen werden, wenn im zweiten Modus.

6. Verzweigungseinheit (210) nach einem der vorhergehenden Ansprüche,
ferner umfassend eine elektrische Tiefpassfiltereinheit (334), die ausgelegt ist, die elektrische Energie tiefpasszufiltern, die über das optische Kabel empfangen wird.

7. Verzweigungseinheit (210) nach einem der vorhergehenden Ansprüche, wobei:
- das optische Kabel an einem Ende mit einem Anschluss (103) des optischen Übertragungssystems (200) verbunden werden kann, der ausgelegt ist, kontinuierliche elektrische Gleichstromenergie an die Verzweigungseinheit (210) über das optische Kabel zu liefern.

8. Verzweigungseinheit (210) nach einem der vorhergehenden Ansprüche, wobei:
- das optische Kabel ein Unterwasserkabel ist; und
- die Verzweigungseinheit (210) für Unterwasseranwendungen ausgelegt ist.

9. Verzweigungseinheit (210) nach einem der vorhergehenden Ansprüche, wobei:
- die erste ankommende Faser (320) Teil eines ersten optischen Kabels ist, das einen elektrischen Leiter umfasst;
- die Verzweigungseinheit (210) einen zweiten optischen Umgehungsschalter (342) umfasst, der ausgelegt ist, über das erste optische Kabel mit Energie versorgt zu werden; und
- der zweite optische Umgehungsschalter (342) ausgelegt ist, einige oder alle Wellenlängen, die auf der zweiten ankommenden Faser (321) getragen werden, zu einigen oder allen entsprechenden Wellenlängen zu führen, die auf der ersten ausgehenden Faser (322) getragen werden, wenn im zweiten Modus; und einige oder alle Wellenlängen, die auf der ersten ankommenden Faser (320) getragen werden, zu einigen oder allen entsprechenden Wellenlängen zu führen, die auf der ersten ausgehenden Faser (322) getragen werden, wenn im ersten Modus.

10. Verzweigungseinheit (210) nach einem der vorhergehenden Ansprüche, wobei:
- die Verzweigungseinheit (210) eine Vielzahl von optischen Umgehungschaltern für eine entsprechende Vielzahl von optischen Kabeln umfasst, die mit der Verzweigungseinheit (210) verbunden werden können;
- mindestens einer der optischen Umgehungsschalter die Vielzahl von optischen Umgehungschaltern unter Verwendung elektrischer Energie mit elektrischer Energie versorgt wird, die über das entsprechende optische Kabel der Vielzahl von optischen Kabeln geliefert wird;
- mindestens einer der Vielzahl von optischen Umgehungsschaltern ausgelegt ist, in dem ersten Modus oder in dem zweiten Modus zu arbeiten;
- die Vielzahl von optischen Umgehungsschaltern ausgelegt ist, derart zu operieren, dass, im Fall einer Unterbrechung der elektrischen Energie an einem der Vielzahl von optischen Kabeln, ein optisches Signal, das von dem einen der Vielzahl von optischen Kabeln geliefert wird, durch ein optisches Signal ersetzt wird, das von einem anderen der Vielzahl von optischen Kabeln geliefert wird.

11. Verzweigungseinheit (210) nach Anspruch 10, wobei:
- die Vielzahl von optischen Kabeln eine Vielzahl von Faserpaaren umfasst;
- ein Faserpaar eine ankommende Faser und eine ausgehende Faser von der Verzweigungseinheit (210) umfasst;
- die Verzweigungseinheit (210) einen oder mehrere Umgehungsschalter für mindestens ein Faserpaar der Vielzahl von Faserpaaren umfasst, das ausgelegt ist, teilweise oder vollständig in der Verzweigungseinheit (210) entnommen zu werden.

12. Verzweigungseinheit (210) nach einem der vorhergehenden Ansprüche, wobei:
- die Verzweigungseinheit (210) einen zweiten Ausgangsport umfasst, der ausgelegt ist, mit einer zweiten ausgehenden Faser (323) gekoppelt zu werden;
- die zweite ausgehende Faser (323) ein Teil des optischen Kabels ist; und
- in dem ersten Modus, der optische Umgehungsschalter (345) ausgelegt ist, die erste ankommende Faser (320) mit der zweiten ausgehenden Faser (323) zu koppeln.

13. Verfahren zum Schützen, in einer Verzweigungseinheit (210), von Wellenlängen-Division-Multiplex-, als WDM bezeichnet, Kanälen auf einer ersten ausgehenden Faser (322), die mit einem ersten Ausgangsport der Verzweigungseinheit (210) gekoppelt ist, gegen Ausfälle auf einer zweiten ankommenden Faser (321), die mit einem zweiten Eingangsport der Verzweigungseinheit (210) gekoppelt ist; wobei das Verfahren umfasst:
- Extrahieren, durch eine erste WDM-Drop-Einheit (350), die in der Verzweigungseinheit (210) enthalten ist, eines zweiten Satzes von Wellenlängen auf einer ersten ankommenden Faser (320), und Führen des zweiten Satzes von Wellenlängen zu entsprechenden Wellenlängen auf der ersten ausgehenden Faser (322);
- Extrahieren, durch die erste WDM-Abfalleinheit (350), die in der Verzweigungseinheit (210) enthalten ist, eines ersten Satzes von Wellenlängen auf der ersten ankommenden Faser (320); wobei der erste Satz von Wellenlängen komplementär zu dem zweiten Satz von Wellenlängen ist;
- Extrahieren, durch eine zweite WDM-Drop-Einheit (351), die in der Verzweigungseinheit (210) enthalten ist, des ersten Satzes von Wellenlängen auf der zweiten ankommenden Faser (321); wobei die zweite ankommende Faser (321) Teil eines optischen Kabels ist, das einen elektrischen Leiter umfasst, wobei die Verzweigungseinheit (210) elektrische Energie über das optische Kabel empfängt;
- in einem ersten Modus, Führen, durch einen optischen Umgehungsschalter (345), wobei der optische Umgehungsschalter (345) in der Verzweigungseinheit (210) enthalten ist, des ersten Satzes von Wellenlängen auf der zweiten ankommenden Faser (321) zu den entsprechenden Wellenlängen auf der ersten ausgehenden Faser (322), wenn elektrische Energie, die über das optische Kabel empfangen wird, über einer Energieschwelle liegt;
- in einem zweiten Modus, Führen, durch einen optischen Umgehungsschalter (345), wobei der optische Umgehungsschalter (345) in der Verzweigungseinheit (210) enthalten ist, des ersten Satzes von Wellenlängen auf der ersten ankommenden Faser (320) zu den entsprechenden Wellenlängen auf der ersten ausgehenden Faser (322), wenn keine elektrische Energie über das optische Kabel empfangen wird, oder die empfangene elektrische Energie unter der Energieschwelle liegt.

## Revendications

1. Unité de branchement (210) pour un système de transmission optique (200), l'unité de branchement (210) comprenant
- un premier et un second ports d'entrée configurés pour être couplés à une première et une seconde fibre d'entrée (320, 321), respectivement ;
- un premier port de sortie configuré pour être couplé à une première fibre de sortie (322) ; la seconde fibre d'entrée (321) faisant partie d'un câble optique comprenant un conducteur électrique ; l'unité de branchement (210) étant configurée pour recevoir de l'énergie électrique via le câble optique ; et
- un commutateur de dérivation optique (345) configuré pour commuter entre un premier mode et un second mode ; dans le premier mode, le commutateur de dérivation (345) étant configuré pour coupler la seconde fibre d'entrée (321) à la première fibre de sortie (322) ; et dans le second mode, le commutateur de dérivation (345) étant configuré pour coupler la première fibre d'entrée (320) à la première fibre de sortie (322) ;
- la première et la seconde fibre d'entrée et la première fibre de sortie (320, 321, 322) étant configurées pour transmettre des signaux multiplex à division de longueur d'onde, WDM, comprenant une pluralité de longueurs d'onde ;
- l'unité de branchement (210) comprenant en outre une première unité d'extraction WDM (350) configurée pour extraire un premier ensemble de longueurs d'onde de la première fibre d'entrée (320) ; une seconde unité d'extraction WDM (351) configurée pour extraire le premier ensemble de longueurs d'onde de la seconde fibre d'entrée (321) ; et une première unité d'addition WDM (352) configurée pour ajouter le premier ensemble de longueurs d'onde à la première fibre de sortie (322) ; et
- le commutateur de dérivation optique (345) étant configuré pour faire passer le premier ensemble de longueurs d'onde de la seconde fibre d'entrée (321) vers le premier ensemble de longueurs d'onde de la première fibre de sortie (322), lorsque dans le premier mode ; et pour faire passer le premier ensemble de longueurs d'onde de la première fibre d'entrée (320) vers le premier ensemble de longueurs d'onde de la première fibre de sortie (322), lorsque dans le second mode ;
le premier mode étant un mode alimenté du commutateur de dérivation optique (345), sous réserve que le commutateur de dérivation optique (345) reçoive de l'énergie électrique via le câble optique au-dessus d'un seuil de puissance, et le second mode étant un mode non alimenté du commutateur de dérivation optique (345), sous réserve que le commutateur de dérivation optique (345) ne reçoive aucune énergie électrique via le câble optique ou qu'une énergie électrique au-dessous du seuil d'énergie.

2. Unité de branchement (210) selon la revendication 1,
- l'unité de branchement (210) étant configurée pour transmettre un second ensemble de longueurs d'onde de la première fibre d'entrée (320) vers le second ensemble de longueurs d'onde de la première fibre de sortie (322) ; et
- le second ensemble de longueurs d'onde étant complémentaire au premier ensemble de longueurs d'onde.

3. Unité de branchement (210) selon n'importe quelle revendication précédente,
- le commutateur de dérivation optique (345) comprenant une première et une seconde interface d'entrée et une première et une seconde interface de sortie ;
- la première interface d'entrée étant couplée à la première fibre d'entrée (320) ;
- la seconde interface d'entrée étant couplée à la seconde fibre d'entrée (321) ;
- la première interface de sortie étant couplée à une seconde fibre de sortie (323) ;
- la seconde interface de sortie étant couplée à la première fibre de sortie (322) ;
- dans le premier mode, la première interface d'entrée étant couplée à la première interface de sortie et la seconde interface d'entrée étant couplée à la seconde interface de sortie ; et
- dans le second mode, la première interface d'entrée étant couplée à la seconde interface de sortie.

4. Unité de branchement (210) selon n'importe quelle revendication précédente, le commutateur de dérivation optique (345) comprenant un commutateur optique électromécanique.

5. Unité de branchement (210) selon n'importe quelle revendication précédente, le commutateur de dérivation optique (345) étant configuré pour
- faire passer certaines ou toutes les longueurs d'onde transportées sur la seconde fibre d'entrée (321) vers certaines ou toutes les longueurs d'onde correspondantes transportées sur la première fibre de sortie (322), lorsque dans le premier mode ; et
- faire passer certaines ou toutes les longueurs d'onde transportées par la première fibre d'entrée (320) vers les certaines ou toutes les longueurs d'onde correspondantes transportées par la première fibre de sortie (322), lorsque dans le second mode.

6. Unité de branchement (210) selon n'importe quelle revendication précédente, comprenant en outre une unité de filtrage électrique passe-bas (334) configurée pour filtrer passe-bas l'énergie électrique reçue via le câble optique.

7. Unité de branchement (210) selon n'importe quelle revendication précédente,
- le câble optique pouvant être connecté à une extrémité à une borne (103) du système de transmission optique (200) configurée pour fournir une énergie électrique continue en courant continu à l'unité de branchement (210) via le câble optique.

8. Unité de branchement (210) selon n'importe quelle revendication précédente,
- le câble optique étant un câble sous-marin ; et
- l'unité de branchement (210) étant configurée pour des applications sous-marines.

9. Unité de branchement (210) selon n'importe quelle revendication précédente,
- la première fibre d'entrée (320) faisant partie d'un premier câble optique comprenant un conducteur électrique ;
- l'unité de branchement (210) comprenant un second commutateur de dérivation optique (342) configuré pour être alimenté via le premier câble optique ; et
- le second commutateur de dérivation optique (342) étant configuré pour faire passer certaines ou toutes les longueurs d'onde transportées sur la seconde fibre d'entrée (321) vers certaines ou toutes les longueurs d'onde correspondantes transportées sur la première fibre de sortie (322), lorsque dans le second mode ; et faire passer certaines ou toutes les longueurs d'onde transportées sur la première fibre d'entrée (320) vers les certaines ou toutes les longueurs d'onde correspondantes transportées sur la première fibre de sortie (322), lorsque dans le premier mode.

10. Unité de branchement (210) selon n'importe quelle revendication précédente,
- l'unité de branchement (210) comprenant une pluralité de commutateurs de dérivation optiques pour une pluralité correspondante de câbles optiques pouvant être connectés à l'unité de branchement (210) ;
- au moins un des commutateurs de dérivation optiques de la pluralité de commutateurs de dérivation optiques étant alimenté électriquement en utilisant de l'énergie électrique fournie via le câble optique correspondant de la pluralité de câbles optiques ;
- au moins un de la pluralité de commutateurs de dérivation optiques étant configuré pour fonctionner dans le premier mode ou dans le second mode ;
- la pluralité de commutateurs de dérivation optiques étant configurés pour fonctionner de telle sorte qu'en cas d'interruption de l'énergie électrique sur l'un de la pluralité de câbles optiques, un signal optique fourni par l'un de la pluralité de câbles optiques soit remplacé par un signal optique fourni par un autre de la pluralité de câbles optiques.

11. Unité de branchement (210) selon la revendication 10,
- la pluralité de câbles optiques comprenant une pluralité de paires de fibres ;
- une paire de fibres comprenant une fibre d'entrée vers, et une fibre de sortie depuis l'unité de branchement (210) ;
- l'unité de branchement (210) comprenant un ou plusieurs commutateurs de dérivation pour au moins une paire de fibres de la pluralité de paires de fibres, qui est configurée pour être partiellement ou complètement extraite dans l'unité de branchement (210).

12. Unité de branchement (210) selon n'importe quelle revendication précédente,
- l'unité de branchement (210) comprenant un second port de sortie configuré pour être couplé à une seconde fibre de sortie (323) ;
- la seconde fibre de sortie (323) faisant partie du câble optique ; et
- dans le premier mode, le commutateur de dérivation optique (345) étant configuré pour coupler la première fibre d'entrée (320) à la seconde fibre de sortie (323).

13. Procédé pour protéger dans une unité de branchement (210) à multiplexage par répartition en longueur d'onde, appelé WDM, des canaux sur une première fibre de sortie (322) couplée à un premier port de sortie de l'unité de branchement (210), contre des défauts sur une seconde fibre d'entrée (321) couplée à un second port d'entrée de l'unité de branchement (210) ;
le procédé comprenant
- l'extraction, par une première unité d'extraction WDM (350) comprise dans l'unité de branchement (210), d'un second ensemble de longueurs d'onde sur une première fibre d'entrée (320) et le passage du second ensemble de longueurs d'onde vers des longueurs d'onde correspondantes sur la première fibre de sortie (322) ;
- l'extraction, par la première unité d'extraction WDM (350) comprise dans l'unité de branchement (210), d'un premier ensemble de longueurs d'onde sur la première fibre d'entrée (320) ; le premier ensemble de longueurs d'onde étant complémentaire au second ensemble de longueurs d'onde ;
- l'extraction, par une seconde unité d'extraction WDM (351) comprise dans l'unité de branchement (210), du premier ensemble de longueurs d'onde sur la seconde fibre d'entrée (321) ; la seconde fibre d'entrée (321) faisant partie d'un câble optique comprenant un conducteur électrique, l'unité de branchement (210) recevant une énergie électrique via le câble optique ;
- dans un premier mode, le passage par un commutateur de dérivation optique (345), le commutateur de dérivation optique (345) étant compris dans l'unité de branchement (210), du premier ensemble de longueurs d'onde sur la seconde fibre d'entrée (321) vers les longueurs d'onde correspondantes sur la première fibre de sortie (322), si l'énergie électrique reçue via le câble optique est supérieure à un seuil d'énergie ;
- dans un second mode, le passage par un commutateur de dérivation optique (345), le commutateur de dérivation optique (345) étant compris dans l'unité de branchement (210), du premier ensemble de longueurs d'onde sur la première fibre d'entrée (320) vers les longueurs d'onde correspondantes sur la première fibre de sortie (322), si aucune énergie électrique n'est reçue via le câble optique ou si l'énergie électrique reçue est inférieure au seuil d'énergie.
